# EUROPEAN PATENT APPLICATION

(11) **EP 1 577 786 A1**
(43) Date of publication of application: **21.09.2005**
(21) Application number: 04006549.2
(22) Date of filing: 18.03.2004
(51) Int. Cl.: G06F 13/40

(54) **Serial/parallel data transformer module and related computer system**

(71) Applicant: High Tech Computer Corp., Tao-Yuan City (TW)
(72) Inventor: Chen, Ren-Peng, Hsin-Tien City Taipei Hsien Taiwan (TW); Liu, Wan-Hsieh, Hsin-Tien City Taipei Hsien Taiwan (TW)
(74) Representative: Schaeberle, Steffen

(57) **Abstract**

A serial/parallel data transformer module (30, 90) has a first serial/parallel data transformer (32) having a parallel port (38) and a serial port (40), a second serial/parallel data transformer (34) having a parallel port (42) and a serial port (44), and a control unit (36, 96) for selectively connecting the parallel ports (38, 42) or the serial ports (40, 44) of the first serial/parallel data transformer (32) and the second serial/parallel data transformer (34).

## Description

The present invention relates to a serial/parallel data transformer module including a plurality of serial/parallel data transformers and a control unit capable of controlling the serial/parallel data transformer module to selectively operate in different modes according to the pre-characterizing clause of claim 1.

Compared with synchronous parallel transmission, asynchronous serial transmission has advantages such as low cost, long transmission distance, and compactness in size. For instance, a UART is a kind of asynchronous serial/parallel data transformer including a microchip for controlling data transmission between a computer (or a processor) and serial devices connected to the computer (or the processor). More clearly, the functions provided by the UART to the computer is similar to data exchange function provided by data terminal equipment (DTE) such as RS-232 so that the computer can exchange data with a serial device such as a modem via a serial bus such as a universal serial bus (USB).

In recent years, one or more processors are generally installed in a computer system in order to speed up data processing. Accordingly, two UARTs are installed in the computer system for data exchange between the two processors and other serial devices. However, the two processors in the computer system can only be respectively connected to the two UARTs to exchange data with each one single serial device.

This in mind, the present invention aims at providing a serial/parallel data transformer module and a related computer system.

This is achieved by a computer system according to claim 1. The dependent claims pertain to corresponding further developments and improvements.

As will be seen more clearly from the detailed description following below, the claimed serial/parallel data transformer module can allow a single processor to exchange data with two serial devices simultaneously, each processor to exchange data with a different serial device simultaneously, two processors to exchange data with each other, and two serial devices to exchange data with each other. Moreover, even two processors having different operational voltages can exchange data with each other by converting the level of the frame data transmitted or received by the two processors by means of the level shifter.

In the following, the invention is further illustrated by way of example, taking reference to the accompanying drawings. Thereof
Fig.1 is a block diagram of a conventional UART system,
Fig.2 is a block diagram of a UART module according to the present invention,
Fig.3 illustrates a first state of a computer system including the UART ASIC according to the second embodiment of the present invention,
Fig.4 illustrates a second state of the computer system according to the second embodiment of the present invention,
Fig.5 illustrates a third state of the computer system according to the second embodiment of the present invention,
Fig.6 illustrates the connection between the first processor, the second processor, the first UART, and the second U ART in the third state of the computer system shown in Fig.5,
Fig.7 illustrates a fourth state of the computer system according to the second embodiment of the present invention, and
Fig.8 illustrates a state of a computer system according to the third embodiment of the present invention.

Compared with synchronous parallel transmission, asynchronous serial transmission has advantages such as low cost, long transmission distance, and compactness in size. For instance, a UART is a kind of asynchronous serial/parallel data transformer including a microchip for controlling data transmission between a computer (or a processor) and serial devices connected to the computer (or the processor). More clearly, the functions provided by the UART to the computer is similar to data exchange function provided by data terminal equipment (DTE) such as RS-232 so that the computer can exchange data with a serial device such as a modem via a serial bus such as a universal serial bus (USB).

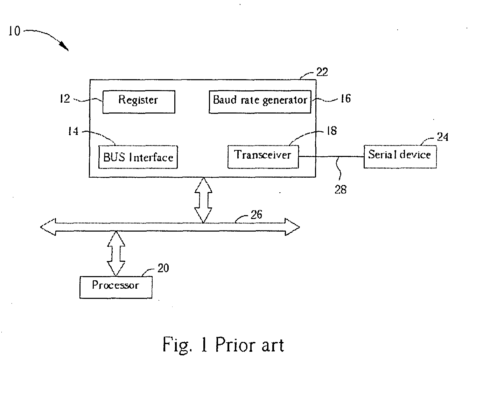

Please refer to Fig.1 showing a block diagram of a conventional UART system 10. The UART system 10 includes a system bus 26 allowing parallel data transmission, a processor 20 electrically connected to the system bus 26 for transmitting and receiving parallel data, a UART 22 for exchanging parallel data with serial data, a USB (or GSB, General Serial Bus) 28 allowing serial data transmission, and a serial device 24 electrically connected to the USB (GSB) 28 for transmitting and receiving serial data.

The UART 22 includes six 8-bit registers 12 for storing control and status information, a baud rate generator 16 for determining the baud rate between the processor 20 and the serial device 24, a bus interface 14 electrically connected between the system bus 26 and the UART 22, and a transceiver 18 electrically connected to the serial device 24 for receiving and transmitting frame data. Generally in the UART 22, the bus interface 14 utilizes eight parallel pins to access data within the processor 20 via the system bus 26, and the transceiver 18 utilizes two pins (RxD for input and TxD for output) to access data within the serial device 24 via the USB (GSB) 28. The frame data includes an initial bit (space, logic "0") and an ending bit (mark, logic "1") with the option to include a parity bit for error correction code (ECC).

The UART 22 serves to transfer data between the processor 20 and the serial device 24. In the case of data being transferred from the processor 20 to the serial device 24, the UART 22 transforms data transmitted in parallel by the processor 20 via the system bus 26 into the frame data by attaching an initial bit and an ending bit (and a parity bit if applicable) to the parallel data according to the control and status information stored in the register 12. The UART 22 then transmits the frame data to the serial device 24 bit by bit via the USB (GSB) 28. In the case of data being transferred from the serial device 24 to the processor 20, the UART 22 transforms the frame data transmitted bit by bit by the serial device 24 via the USB (GSB) 28 into parallel data. The UART 22 then transmits the data in parallel to the processor 20 via the system bus 26 by checking and then discarding the parity bit (if a parity bit is attached) and stripping both the initial bit and ending bit.

In recent years, one or more processors are generally installed in a computer system in order to speed up data processing. Accordingly, two UARTs are installed in the computer system for data exchange between the two processors and other serial devices. However, the two processors in the computer system can only be respectively connected to the two UARTs to exchange data with each one single serial device.

In addition to the UART (RS232 is a type of UART) mentioned above, the serial/parallel data transformer further includes I²C (inter-IC), USB (Universal Serial Bus), SPI (Serial Peripheral Interface), SSP (Synchronous Serial Protocol), Microwire and I²S (Inter IC Sound) etc. I²C is connected between two ICs to transmit data between them via two bilateral (transmitting and receiving) transmission lines (serial data line SDA and serial clock line SCL).

The serial/parallel data transformer module according to the present invention includes at least two identical serial/parallel data transformers. Since the data transformation of I²C, USB, SPI, SSP, Microwire and I²S are similar to that of UART, only the UART is described in the following description example.

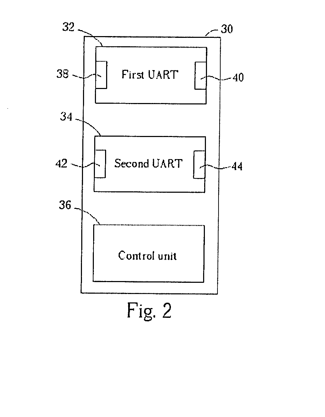

Please refer to Fig.2 showing a block diagram of a UART module 30 according to the present invention. The UART module 30 can be an application specific integrated circuit (ASIC); that is, all the devices within the UART module 30 are integrated in the ASIC. The UART ASIC 30 includes a first UART 32, a second UART 34, and a control unit 36 for controlling the connection between the first UART 32 and the second UART 34 or between the UART and a parallel device such as a processor or a serial device such as a modem. The first UART 32 includes a first parallel port 38 (electrically connected to the bus interface 14 within the UART 22 shown in Fig.1) and a first serial port 40 (electrically connected to the transceiver 18 within the UART 22 shown in Fig.1); the second UART 34 includes a second parallel port 42 and a second serial port 44. The control by the control unit 36 on the connection between the first UART 32 and the second UART 34 or between the UART and other parallel or serial devices is described in the following.

As mentioned above, the UART 22 shown in Fig.1 includes six 8-bit registers 12 for storing the control and status information. The UART 22 receives or transmits data according to the control and status information stored in the registers 12. The six registers are: an XMITDT register for storing 8-bit data to be transmitted by the transceiver 18, a RECVDT register for storing 8-bit data received by the transceiver 18, a DIVMSB register and a DIVLSB register for cooperatively storing a 16-bit (8 bits plus 8 bits) baud rate, a STATUS register for storing important information such as the current operation mode (transmitting or receiving data) of the UART 22, and a CLRINT register for remarking whether the data transmission and reception of the UART 22 is completed or not. The initial four low bits of the UART 22 are in sequence: an XMIT bit (bit 0, LSB) representing that the UART 22 is transmitting (also called under data transmission status) frame data, an RECV bit (bit 1) representing that the UART 22 is receiving (also called under data reception status) frame data, a DONE_XMIT bit (bit 2) representing that the UART 22 has completed transmitting the frame data, and a DONE_RECV bit (bit 3) representing that the UART 22 has completed receiving the frame data. The serial/parallel data transformer module (i.e. UART module 30) according to the present invention changes data transmission status between the first UART 32 and the second UART 34 or between the UART and other parallel or serial devices by changing the control and status information stored in the registers of the first UART 32 and the second UART 34.

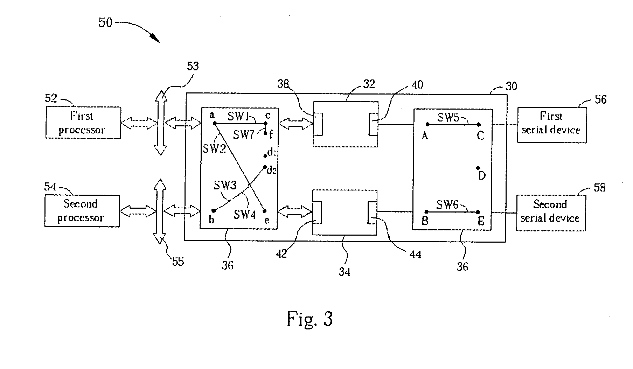

Please refer to Fig.3 showing a first state of a computer system 50 including the UART ASIC 30 according to the second embodiment of the present invention. The computer system 50 further includes a first processor 52, a first system bus 53 for electrically connecting the first processor 52 to the UART ASIC 30, a second processor 54, a second system bus 55 for electrically connecting the second processor 54 to the UART ASIC 30, a first serial device 56, and a second serial device 58. In the second embodiment, switches SW₁, SW₂, SW₃, SW₄, SW₅, SW₆, SW₇ in the control unit 36 connect respectively node a and c, node a and e, node b and d₂, node b and d₂, node A and C, node B and E, node c and f. With this setup, the first processor 52 can exchange data simultaneously with the first serial device 56 and the second serial device 58 via the UART ASIC 30 while the second processor 54 is idle. When the first processor 52 transmits 8-bit data to the first serial device 56 and the second serial device 58, the lowest bit (XMIT bit) in the STATUS register of the six registers within the first UART 32 and the second UART 34 of the UART ASIC 30 will be determined as "1". Of course, the 8-bit data will have an initial bit and an ending bit attached to transform it into frame data so that it can be transmitted to the first serial device 56 and the second serial device 58. In the case when the first processor 52 receives frame data from the first serial device 56 and the second serial device 58, the RECV bit (bit 1) in the STATUS register will be determined as "1".

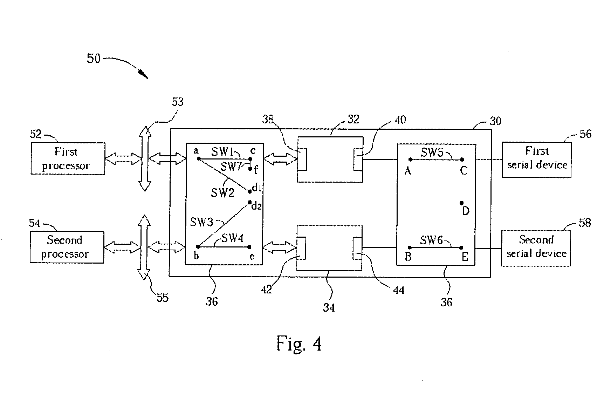

In the computer system 50, the first processor 52 and the second processor 54 can exchange data respectively with the first serial device 56 and the second serial device 58. Please refer to Fig.4 showing a second state of the computer system 50 according to the second embodiment of the present invention. As shown in Fig.4, the switches SW₁, SW₂, SW₃, SW₄, SW₅, SW₆, SW₇ in the control unit 36 connect respectively node a and c, node a and d₁, node b and d₂, node b and e, node A and C, node B and E, node c and f. In this setup, the first processor 52 can exchange data with the first serial device 56 via the first UART 32 of the UART ASIC 30, and the second processor 54 can exchange data with the second serial device 58 via the second UART 34 of the UART ASIC 30. By setting the value of the respective corresponding STATUS register in the first UART 32 and the second UART 34, the first processor 52 and the second processor 54 can respectively transmit and receive data with the first serial device 56 and the second serial device 58.

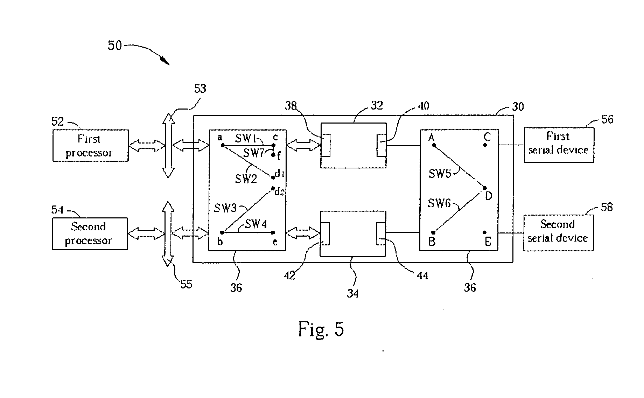

In the computer system 50 described above, the processors (the first processor 52 and the second processor 54) exchange data with serial devices (the first serial device 56 and the second serial device 58); however, data exchange between the processors is also needed. Please refer to Fig.5 showing a third state of the computer system 50 according to the second embodiment of the present invention. In the computer system 50 shown in Fig.5, the switches SW₁, SW₂, SW₃, SW₄, SW₅, SW₆, SW₇ in the control unit 36 connect respectively node a and c, node a and d₁, node b and d₂, node b and e, node A and D, node B and D, node c and f. In this setup, the first processor 52 can exchange data with the second processor 54 via the first UART 32 and the second UART 34 of the UART ASIC 30. When the first processor 52 transmits 8-bit data to the second processor 54, the lowest bit (XMIT bit) in the STATUS register of the six registers within the first UART 32 will be determined as "1" in order to send out the frame data transformed from the 8-bit data, and the RECV bit (bit 1) in the STATUS register of the six registers within the second UART 34 will be determined as "1" in order to receive the frame data from the first UART 32 (essentially, connecting the Tx end of the first UART 32 for transmitting data with the Rx end of the second UART 34 for receiving data). In the case when the second processor 54 transmits 8-bit data to the first processor 52, the lowest bit (XMIT bit) in the STATUS register of the six registers within the second UART 34 will be determined as "1" in order to send out the frame data transformed from the 8-bit data and the RECV bit (bit 1) in the STATUS register of the six registers within the first UART 32 will be determined as "1" in order to receive the frame data from the second UART 34.

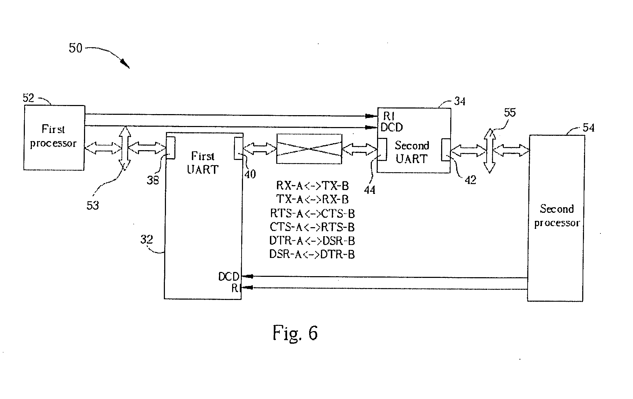

Please refer to Fig.6 showing the connection between the first processor 52, the second processor 54, the first UART 32, and the second UART 34 in the third state of the computer system 50 shown in Fig.5. As shown in Fig.6, the first UART 32 is controlled to respectively connect to the second UART 34 as a TX, RX, CTS, RTS, DSR, and DTR. That is, when the first processor 52 transmits 8-bit data to the second processor 54, the first UART 32 functions as a transmitter (TX), and the second UART 34 functions as a receiver. When the second processor 54 transmits 8-bit data to the first processor 52, the first UART 32 functions as a receiver (RX), and the second UART 34 functions as a transmitter (RX).

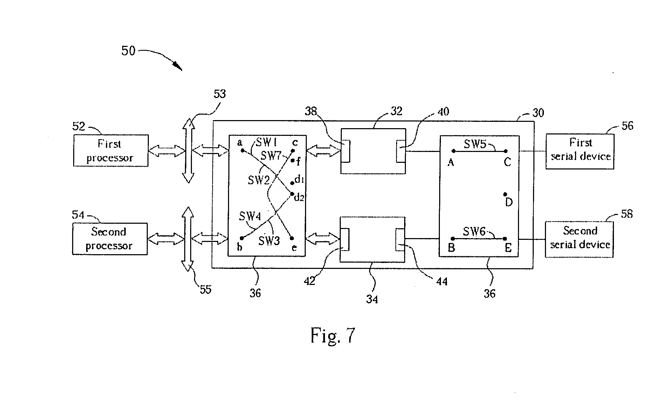

The first serial device 56 and the second serial device 58 in the computer system 50 can also exchange data with each other. Please refer to Fig.7 showing a fourth state of the computer system 50 according to the second embodiment of the present invention. In the computer system 50 shown in Fig.7, the switches SW₁, SW₂, SW₃, SW₄, SW₅, SW₆, SW₇ in the control unit 36 connect respectively node a and d₂, node a and d₂, node b and d₂, node b and d₂, node A and C, node B and E, node c and e. In this setup, the first serial device 56 can exchange data with the second serial device 58 via the first UART 32 and the second UART 34. When the first serial device (host) 56 transmits frame data to the second serial device 58, the RECV bit (bit 1) in the STATUS register of the six registers within the first UART 32 will be determined as "1" in order to receive the frame data from the first serial device 56, and the lowest bit (XMIT bit) in the STATUS register of the six registers within the second UART 34 will be determined as "1" in order to send out the frame data (transformed from 8-bit data which is transformed from the frame data by the first UART 32) to the second serial device 58. The same procedure applies in the case that the second serial device 58 transmits frame data to the first serial device 56.

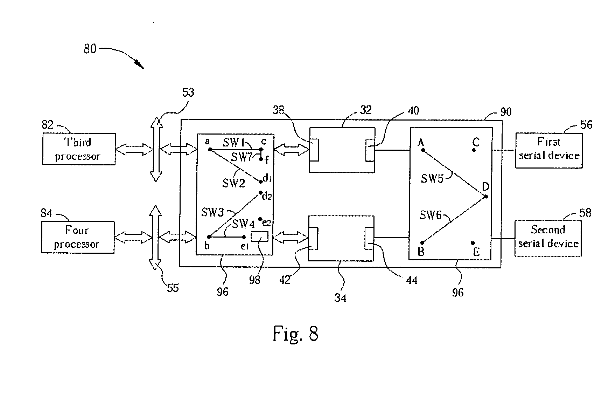

In the computer system 50 shown in Fig.5, the first processor 52 and the second processor 54 is assumed to have the same operational voltage. However, in some computer systems having two processors, the operational voltage of the two processors may not be the same, meaning that data cannot be exchanged between two processors. Please refer to Fig.8 showing a status of a computer system 80 according to the third embodiment of the present invention. A third processor 82 and a fourth processor 84 in the computer system 80 have different operational voltages (e.g. the operational voltage of the third processor 82 is 2.5v, and the operational voltage of the fourth processor 84 is 3.3v). The computer system 80 also includes a first serial device 56, a second serial device 58, a first system bus 53, a second system bus 55, and a UART ASIC 90. Being different from the UART ASIC 30 shown in Fig.2, the UART ASIC 90 includes not only the first UART 32, the second UART 34, and a control unit 96 (the control unit 96 is different from the control unit 36 in that node e of the control unit 36 is replaced by node e₁ and e₂ in the control unit 96), but also a level shifter 98 electrically connected to node e₁. When switches SW₁, SW₂, SW₃, SW₄, SW₅, SW₆, SW₇ in the control unit 96 connect respectively node a and c, node a and d₁, node b and d₂, node b and e₁, node A and D, node B and D, node c and f; the level shifter 98 converts the frame data output by the third processor 82 into a predetermined voltage. Then the first UART 32 transmits the converted frame data to the second UART 34 and the control unit 96. Afterwards, the level shifter 98 converts it into voltage level of the fourth processor 84. The same procedure applies when the frame data is output by the fourth processor 84 instead of the third processor 82. In such a manner, even if the operational voltages are different, the third processor 82 and the fourth processor 84 in the computer system 80 can exchange data.

In the UART ASIC 90 shown in Fig.8, the level shifter 98 is located outside of the first UART 32 and the second UART 34. Of course though, the level shifters in the serial/parallel data transformer module according to the present invention can be respectively installed in the first UART 32 and/or the second UART 34.

In contrast to the prior art, the serial/parallel data transformer module according to the present invention can allow the following: a single processor to exchange data with two serial devices simultaneously, each processor to exchange data with a different serial device simultaneously, two processors to exchange data with each other, and two serial devices to exchange data with each other. Moreover, even two processors having different operational voltages can exchange data with each other by converting the level of the frame data transmitted or received by the two processors by means of the level shifter.

## Claims

1. A computer system (50, 80) comprising:
a first processor (52, 82);
a first serial/parallel data transformer (32) comprising a parallel port (38) and a serial port (40);
a second serial/parallel data transformer (34) comprising a parallel port (42) and a serial port (44); and
**characterized by**:
a control unit (36, 96) for selectively connecting in an electrical fashion the first processor (52, 82) to the parallel port (38) of the first serial/parallel data transformer (32), the first processor (52, 82) to both the parallel port (38) of the first serial/parallel data transformer (32) and the parallel port (42) of the second serial/parallel data transformer (34), or the first processor (52, 82) to the serial port (40) of the first serial/parallel data transformer (32); and electrically connecting the serial port (40) of the first serial/parallel data transformer (32) to the serial port (44) of the second serial/parallel data transformer (34).

2. The computer system (50, 80) of claim 1 **characterized in that** the computer system (50, 80) further comprises a serial device (56) electrically connected to the serial port (40) of the first serial/parallel data transformer (32).

3. The computer system (50, 80) of claim 1 **characterized in that** the computer system (50, 80) further comprises two serial devices (56, 58) respectively electrically connected to the serial port (40) of the first serial/parallel data transformer (32) and the serial port (44) of the second serial/parallel data transformer (34).

4. The computer system (50, 80) of claim 1 **characterized in that** the computer system (50, 80) further comprises a second processor (54, 84) electrically connected to the parallel port (42) of the second serial/parallel data transformer (34).

5. The computer system (50) of claim 4 **characterized in that** the first processor (52) has an operational voltage equal to that of the second processor (54).

6. The computer system (80) of claim 4 **characterized in that** the first processor (82) has an operational voltage different from that of the second processor (84).

7. The computer system (80) of claim 1 **characterized in that** the computer system (80) further comprises a level shifter (98) electrically connected between the serial port (40) of the first serial/parallel data transformer (32) and the serial port (44) of the second serial/parallel data transformer (34) for adjusting the level of data transmitted between the serial port (40) of the first serial/parallel data transformer (32) and the serial port (44) of the second serial/parallel data transformer (34).

8. The computer system (50, 80) of claim 1 **characterized in that** the control unit (36, 96) is a logic circuit.

9. The computer system (50, 80) of claim 1 **characterized in that** the control unit (36, 96) is a program code stored in a memory.

10. The computer system (50, 80) of claim 1 **characterized in that** the first serial/parallel data transformer (32), the second serial/parallel data transformer (34), and the control unit (36, 96) are integrated on an application specific integrated circuit (ASIC).

11. The computer system (50, 80) of claim 1 **characterized in that** the first serial/parallel data transformer (32) is a universal asynchronous receiver/transmitter (UART).

12. The computer system (50, 80) of claim 1 **characterized in that** the first serial/parallel data transformer (32) is an inter-IC (I²C).

13. The computer system (50, 80) of claim 1 **characterized in that** the first serial/parallel data transformer (32) is a universal serial bus (USB).

14. The computer system (50, 80) of claim 1 **characterized in that** the first serial/parallel data transformer (32) is a Serial Peripheral Interface (SPI).

15. The computer system (50, 80) of claim 1 **characterized in that** the first serial/parallel data transformer (32) is a Synchronous Serial Protocol interface (SSP).

16. The computer system (50, 80) of claim 1 **characterized in that** the first serial/parallel data transformer (32) is a Microwire interface.

17. The computer system (50, 80) of claim 1 **characterized in that** the first serial/parallel data transformer (32) is an Inter IC Sound interface (I²S).

18. A serial/parallel data transformer module (30, 90) comprising:
a first serial/parallel data transformer (32) comprising a parallel port (38) and a serial port (40);
a second serial/parallel data transformer (34) comprising a parallel port (42) and a serial port (44); and
**characterized by**:
a control unit (36, 96) for selectively connecting in an electrical fashion the parallel port (38) of the first serial/parallel data transformer (32) to the parallel port (42) of the second serial/parallel data transformer (34) or the serial port (40) of the first serial/parallel data transformer (32) to the serial port (44) of the second serial/parallel data transformer (34).

19. The serial/parallel data transformer module (90) of claim 18 **characterized in that** the serial/parallel data transformer module (90) further comprises a level shifter (98) electrically connected between the serial port (40) of the first serial/parallel data transformer (32) and the serial port (44) of the second serial/parallel data transformer (34) for adjusting the level of data transmitted between the serial port (40) of the first serial/parallel data transformer (32) and the serial port (44) of the second serial/parallel data transformer (34).

20. The serial/parallel data transformer module (30, 90) of claim 18 **characterized in that** the control unit (36, 96) is a logic circuit.

21. The serial/parallel data transformer module (30, 90) of claim 18 **characterized in that** the control unit (36, 96) is a program code stored in a memory.

22. The serial/parallel data transformer module (30, 90) of claim 18 **characterized in that** the first serial/parallel data transformer (32), the second serial/parallel data transformer (34), and the control unit (36, 96) are integrated on an ASIC.

23. The serial/parallel data transformer module (30, 90) of claim 18 **characterized in that** the first serial/parallel data transformer (32) is a UART.

24. The serial/parallel data transformer module (30, 90) of claim 18 **characterized in that** the first serial/parallel data transformer (32) is an I²C.

25. The serial/parallel data transformer module (30, 90) of claim 18 **characterized in that** the first serial/parallel data transformer (32) is a USB.

26. The serial/parallel data transformer module (30, 90) of claim 18 **characterized in that** the first serial/parallel data transformer (32) is a SPI.

27. The serial/parallel data transformer module (30, 90) of claim 18 **characterized in that** the first serial/parallel data transformer (32) is a SSP.

28. The serial/parallel data transformer module (30, 90) of claim 18 **characterized in that** the first serial/parallel data transformer (32) is a Microwire.

29. The serial/parallel data transformer module (30, 90) of claim 18 **characterized in that** the first serial/parallel data transformer (32) is an I²S.
